# EUROPEAN PATENT SPECIFICATION

(11) **EP 2 624 418 B1**
(45) Date of publication and mention of the grant of the patent: **23.11.2016**
(21) Application number: 12290037.6
(22) Date of filing: 31.01.2012
(51) Int. Cl.: H02K 5/22, H02K 9/19, H02K 3/50

(54) **Electric machine**
Elektrische Maschine
Machine électrique

(43) Date of publication of application: 07.08.2013
(73) Proprietor: General Electric Technology GmbH, 5400 Baden (CH)
(72) Inventor: Ast, Jean Charles, 90000 Belfort (FR); Morel, Eric, 90000 Belfort (FR)
(74) Representative: General Electric Technology GmbH

(56) References cited:
- GB-A- 881 908
- US-A- 2 992 290
- US-A- 3 030 530
- US-A- 3 483 396
- US-A- 4 140 934
- US-A- 4 172 984
- US-A- 4 317 952

## Description

### TECHNICAL FIELD

The present disclosure relates to an electric machine. The electric machine is preferably a rotating electric machine such as a synchronous or asynchronous electric generator, anyhow the electric machine can also be a different rotating electric machine such as a synchronous or asynchronous electric motor or a machine different from a rotating electric machine.

### BACKGROUND

Rotating electric machines such as electric generators have a casing that houses a stator and a rotor. The stator has stator windings that are connected to the outside of the electric machine via bushings.

US 3 483 396 A and US 4 172 984 are examples of such electrical machines.

Bushings are components needed to transfer electric power from the stator to the outside of the casing (for example for an electric generator) or from the outside of the casing to the stator (for example for an electric motor).

Usually, a cooling circuit is also provided to cool the stator and bushings. For example, the cooling circuit can be a water cooling circuit; in this case the cooling circuit comprises a water source external to the casing and pipes that provide the water to the stator in the casing.

The stator is then connected to the bushings, such that the water moving out from the stator passes through the bushings to cool them.

Usually at least some of the bushings are connected together, to define a star (or delta) connected electric machine. For this reason a connection between at least some of the bushings is provided.

It is known to realise this connection through tubular elements, each having an end connected to a bushing and the other end connected to the other tubular elements.

In order to cool them, these tubular elements are connected to the cooling circuit of the electric machine (though the bushings), such that the cooling water passes through the stator, the bushings, the tubular elements and is then discharged.

This known cooling system has some drawbacks.

In fact, the water that passes through the tubular elements has a high temperature that is not optimised for cooling, because it has already passed through the stator and bushings when it reaches the tubular elements.

In addition, in order to avoid transmission of any mechanical stress from the tubular elements (that deform according to the temperature) to the bushings, an electric conductive, deformable connection between the bushings and the tubular elements must be provided. This electric conductive, deformable connection includes a plurality of small pipes between the bushings and the tubular elements (because it must also allow water passage from the bushings to the tubular elements). These connections could not be reliable, because they can cause leakages.

### SUMMARY

An aspect of the disclosure includes providing an electric machine with elements that connects the bushings together having an optimised cooling system.

Another aspect of the disclosure includes providing an electric machine with elements that connect the bushings together having a reliable cooling system (in particular the cooling system is more reliable than existing cooling systems).

These and further aspects are attained by providing an electric machine in accordance with the accompanying claims.

### BRIEF DESCRIPTION OF THE DRAWINGS

Further characteristics and advantages will be more apparent from the description of a preferred but non-exclusive embodiment of the electric machine illustrated by way of non-limiting example in the accompanying drawings, in which:
Figure 1 is a schematic view of an electric machine;
Figure 2 is a schematic view of three bushings with an element connecting them together.

### DETAILED DESCRIPTION OF EXEMPLARY EMBODIMENTS

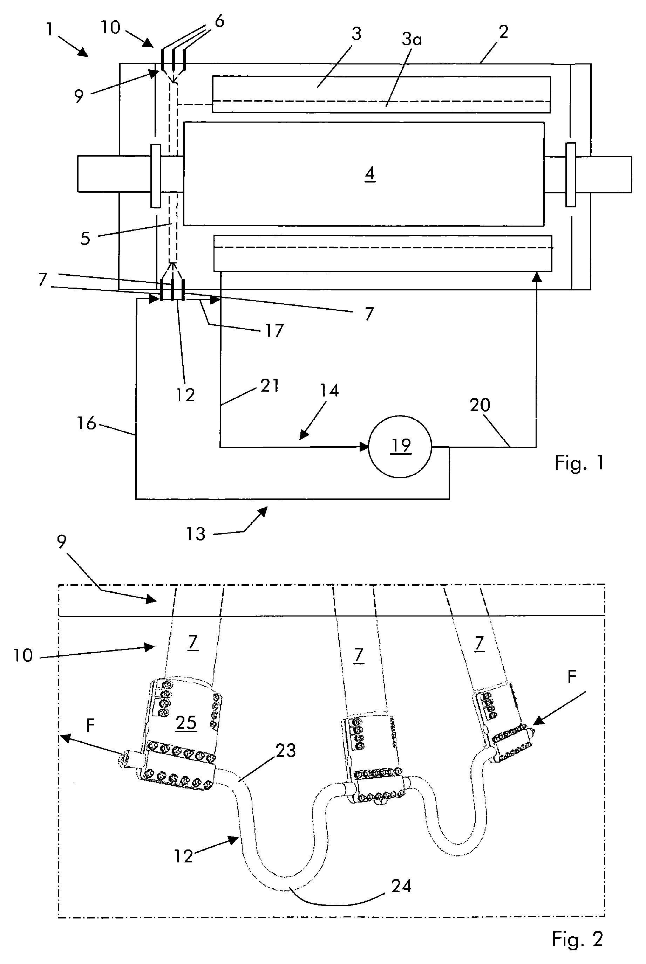

Figure 1 schematically shows an example of an electric machine 1. The electric machine 1 has a casing 2 that houses a stator 3 and a rotor 4.

The stator 3 has stator windings 3a connected to phase rings 5 that are in turn connected to bushings 6, 7.

The bushings 6, 7 penetrate the casing 2 and have a first portion 9 inside of the casing 2 and a second portion 10 outside of the casing 2. The stator winding 3a are connected to the first portion 9 of the bushings 6, 7.

The example of figure 1 shows an example of a three-phase electric machine, for this reason six bushings are shown; as known each winding of the three-phase winding is connected to two bushings; in particular each winding is connected to one bushing 6 and one bushing 7; the bushings 6 are connected to a grid or to an electric power source or other components (according to the kind of electric machine), the other bushings 7 are connected together. Often they are star connected; this is anyhow not mandatory, because the bushings 6, 7 could be delta connected.

In the example shown, the bushings 7 have their second portions 10 connected together by an element 12. Preferably the element 12 is a tubular element, but this is not mandatory. In the following reference to the preferred tubular element is made. The tubular element can have any cross section, shape and dimension and any wall thickness according to the needs.

The tubular element 12 is connected to a water cooling circuit 13 that is external to the casing 2.

The stator 3 is connected to a water cooling circuit 14, and the water cooling circuit 13 of the tubular element 12 is connected to the water cooling circuit 14 of the stator 3.

For example, the water cooling circuit 13 of the tubular element 12 includes a supply pipe 16 for providing water to the tubular element 12, and a return pipe 17 for removing water from the tubular element 12.

Likewise, the water cooling circuit 14 of the stator includes a water source 19 (such as a tank), a supply pipe 20 connected to the water source 19 for providing water to the stator 3, and a return pipe 21 also connected to the water source 19 for removing water from the stator.

Preferably, the supply pipe 16 for providing water to the tubular element 12 diverts from the supply pipe 20 for providing water to the stator 3, and the return pipe 17 for removing water from the tubular element 12 diverts from the return pipe 21 for removing water from the stator 3.

As shown in the figures, the tubular element 12 includes a plurality of parts 23 joined together.

In addition, zones 24 of the tubular element between each couple of bushings 7 connected together are U shaped. This prevents or limits stress transmission from the tubular element 12 to the bushings 7.

As shown in figure 2, brackets 25 are provided to connect the tubular element 12 to the bushings 7; these brackets 25 have a portion connected to the bushings 7 and a portion connected to the tubular element 12. The brackets 25 allow an easy assembling of the tubular element 12 to the bushings 7 and, in addition, allow a large heat exchange between the tubular element 12 and the bushings, such that the tubular element 12 can help and increase cooling of the bushings 7.

The operation of the electric machine 1 is apparent from that described and illustrated and is substantially the following.

During operation the cooling circuit 14 provides water to the stator 3 via the pipe 20 to cool the stator and bushings; for example the cooling circuit 14 can be provided with a pump and a filter.

Likewise the cooling circuit 13 provides water to the tubular element 12 to cool it (arrow F). Since the cooling circuit 13 is completely outside of the casing and the water comes from the pipe 20 (but it can also be connected to the water source 19), the water temperature is optimised for cooling. In addition, possible maintenance operations are easy and fast and do not require long outages of the generator (to access the inside of the casing).

Naturally the features described may be independently provided from one another.

In practice the materials used and the dimensions can be chosen at will according to requirements and to the state of the art.

### REFERENCE NUMBERS

- 1: electric machine
- 2: casing
- 3: stator
- 3a: stator windings
- 4: rotor
- 5: phase rings
- 6: bushing
- 7: bushing
- 9: first portion
- 10: second portion
- 12: tubular element
- 13: water cooling circuit
- 14: water cooling circuit
- 16: supply pipe
- 17: return pipe
- 19: water source
- 20: supply pipe
- 21: return pipe
- 23: part
- 24: zone
- 25: bracket
- F: water

## Claims

1. An electric machine (1) comprising
a casing (2) housing a stator (3) with stator windings (3a) and a rotor (4),
bushings (6, 7) penetrating the casing (2) and having a first portion (9) inside of the casing (2) and a second portion (10) outside of the casing (2),
the stator windings (3a) being connected to the first portion (9) of the bushings (6, 7),
at least some of the bushings (7) having the second portions (10) connected together electrically conductive by at least an element (12),
the at least one element (12) being connected to a water cooling circuit (13),
**characterised in that** the water cooling circuit (13) is external to the casing (2), the stator (3) is connected to a water cooling circuit (14),
the water cooling circuit (13) of the at least one element (12) is connected to the water cooling circuit (14) of the stator (3), and the electrically conductive element (12) is a tubular element (12) through which the cooling water flows.

2. The electric machine (1) according to claim 1, **characterised in that** the water cooling circuit (13) of the at least a tubular element (12) includes a supply pipe (16) for providing water to the at least an element (12), and
a return pipe (17) for removing water from the at least an element (12).

3. The electric machine (1) according to claim 1, **characterised in that** the water cooling circuit (14) of the stator (3) includes
a water source (19)
a supply pipe (20) for providing water to the stator (3), and
a return pipe (21) for removing water from the stator (3),
wherein
the supply pipe (16) for providing water to the at least an element (12) diverts from the supply pipe (20) for providing water to the stator (3), and
the return pipe (17) for removing water from the at least an element (12) diverts from the return pipe (21) for removing water from the stator (3).

4. The electric machine (1) according to claim 1, **characterised in that** the at least an element (12) includes a plurality of parts (23) joined together.

5. The electric machine (1) according to claim 1, **characterised by** comprising brackets (25), each having a portion connected to a bushing (7) and a portion connected to the at least an element (12).

6. The electric machine (1) according to claim 1, **characterised in that** zones (24) of the at least an element (12) between each couple of bushings (7) connected together are U shaped.

## Patentansprüche

1. Elektrische Maschine (1), umfassend:
ein Gehäuse (2), welches einen Stator (3) mit Statorwicklungen (3a) und einen Rotor (4) umfasst,
Buchsen (6, 7), welche das Gehäuse (2) durchdringen und einen ersten Abschnitt (9) innerhalb des Gehäuses (2) und einen zweiten Abschnitt (10) außerhalb des Gehäuses (2) aufweisen,
wobei die Statorwicklungen (3a) mit dem ersten Abschnitt (9) der Buchsen (6, 7) verbunden sind,
wobei mindestens einige der Buchsen (7) die zweiten Abschnitte (10) durch mindestens ein Element (12) elektrisch leitfähig miteinander verbinden,
wobei das mindestens eine Element (12) mit einem Kühlwasserkreislauf (13) verbunden ist,
**dadurch gekennzeichnet, dass** der Kühlwasserkreislauf (13) extern zum Gehäuse (2) angeordnet ist, der Stator (3) mit einem Kühlwasserkreislauf (14) verbunden ist, der Kühlwasserkreislauf (13) des mindestens einen Elements (12) mit dem Kühlwasserkreislauf (14) des Stators (3) verbunden ist und das elektrisch leitfähige Element (12) ein röhrenförmiges Element (12) ist, durch welches das Kühlwasser fließt.

2. Elektrische Maschine (1) nach Anspruch 1, **dadurch gekennzeichnet, dass** der Kühlwasserkreislauf (13) des mindestens einen röhrenförmigen Elements (12) Folgendes umfasst:
ein Speiserohr (16) zum Bereitstellen von Wasser an das mindestens eine Element (12), und
ein Rücklaufrohr (17) zum Entfernen von Wasser aus dem mindestens einen Element (12).

3. Elektrische Maschine (1) nach Anspruch 1, **dadurch gekennzeichnet, dass** der Kühlwasserkreislauf (14) des Stators (3) Folgendes umfasst:
eine Wasserquelle (19),
ein Speiserohr (20) zum Bereitstellen von Wasser zum Stator (3), und
ein Rücklaufrohr (21) zum Entfernen von Wasser aus dem Stator (3),
wobei
das Speiserohr (16) zum Bereitstellen von Wasser an das mindestens eine Element (12) aus dem Speiserohr (20) zum Bereitstellen von Wasser zum Stator (3) umgeleitet wird, und
das Rücklaufrohr (17) zum Entfernen von Wasser aus dem mindestens einen Element (12) aus dem Rücklaufrohr (21) zum Entfernen von Wasser aus dem Stator (3) umgeleitet wird.

4. Elektrische Maschine (1) nach Anspruch 1, **dadurch gekennzeichnet, dass** das mindestens eine Element (12) mehrere Teile (23) umfasst, welche miteinander verbunden sind.

5. Elektrische Maschine (1) nach Anspruch 1, **dadurch gekennzeichnet, dass** die elektrische Maschine (1) Halterungen (25) umfasst, welche jede einen Abschnitt, welcher mit einer der Buchsen (7) verbunden ist, und einen Abschnitt aufweist, welcher mit dem mindestens einem Element (12) verbunden ist.

6. Elektrische Maschine (1) nach Anspruch 1, **dadurch gekennzeichnet, dass** Teile (24) des mindestens einen Elements (12) zwischen jedem Paar von Buchsen (7), welche miteinander verbunden sind, U-förmig sind.

## Revendications

1. Machine électrique (1), comprenant
un carter (2) logeant un stator (3) comprenant des enroulements de stator (3a) et un rotor (4),
des traversées (6, 7) pénétrant dans le carter (2) et ayant une première portion (9) à l'intérieur du carter (2) et une deuxième portion (10) à l'extérieur du carter (2),
les enroulements de stator (3a) étant connectés à la première portion (9) des traversées (6, 7),
au moins certaines des traversées (7) ayant les deuxièmes portions (10) connectées les unes aux autres de manière électriquement conductrice par au moins un élément (12),
l'au moins un élément (12) étant connecté à un circuit de refroidissement par eau (13),
**caractérisée en ce que** le circuit de refroidissement par eau (13) est externe au carter (2),
le stator (3) est connecté à un circuit de refroidissement par eau (14), le circuit de refroidissement par eau (13) de l'au moins un élément (12) est connecté au circuit de refroidissement par eau (14) du stator (3), et l'élément électriquement conducteur (12) est un élément tabulaire au travers duquel s'écoule l'eau de refroidissement.

2. Machine électrique (1) selon la revendication 1, **caractérisée en ce que** le circuit de refroidissement par eau (13) de l'au moins un élément tubulaire (12) comporte
une conduite d'alimentation (16) pour fournir de l'eau à l'au moins un élément (12), et
une conduite de retour (17) pour enlever de l'eau de l'au moins un élément (12).

3. Machine électrique (1) selon la revendication 1, **caractérisée en ce que** le circuit de refroidissement par eau (14) du stator (3) comporte
une source d'eau (19),
une conduite d'alimentation (20) pour fournir de l'eau au stator (3), et
une conduite de retour (21) pour enlever de l'eau du stator (3),
la conduite d'alimentation (16) pour fournir de l'eau à l'au moins un élément (12) se bifurquant à partir de la conduite d'alimentation (20) pour fournir de l'eau au stator (3), et
la conduite de retour (17) pour enlever de l'eau de l'au moins un élément (12) se bifurquant à partir de la conduite de retour (21) pour enlever de l'eau du stator (3).

4. Machine électrique (1) selon la revendication 1, **caractérisée en ce que** l'au moins un élément (12) comporte une pluralité de parties (23) reliées les unes aux autres.

5. Machine électrique (1) selon la revendication 1, **caractérisée en ce qu'**elle comprend des supports (25), chacun ayant une portion connectée à une traversée (7) et une portion connectée à l'au moins un élément (12).

6. Machine électrique (1) selon la revendication 1, **caractérisée en ce que** des zones (24) de l'au moins un élément (12), entre chaque paire de traversées (7) connectées les unes aux autres, sont en forme de U.
